# EUROPÄISCHE PATENTANMELDUNG

(11) **EP 1 461 991 A2**
(43) Veröffentlichungstag der Anmeldung: **29.09.2004**
(21) Anmeldenummer: 04101180.0
(22) Anmeldetag: 23.03.2004
(51) Int. Cl.: A01D 41/12

(54) **Austrageinrichtung zum Austragen von Erntegut aus einer Erntemaschine**

(30) Priorität: 28.03.2003 DE 10314081
(71) Anmelder: DEERE & COMPANY, Moline, Illinois 61265-8098 (US)
(72) Erfinder: Weichholdt, Dirk, 57200, Sarreguemines (FR); Braunhardt, Klaus, 66482, Zweibrücken (DE); Lauer, Fritz, 66894, Krähenberg (DE)
(74) Vertreter: Holst, Sönke, Dr.

(57) **Zusammenfassung**

Die Erfindung betrifft eine Austrageinrichtung zum Austragen von Erntegut aus einer Erntemaschine, umfassend einen in Drehung versetzbaren Rotor, der innerhalb eines Gehäuses (72) mit einem Gehäuseboden (94) angeordnet ist.

Es wird vorgeschlagen, dass der Gehäuseboden (94) in eine lineare Hin- und Herbewegung versetzbar ist, um der Austrageinrichtung das auszutragende Erntegut zuzuführen. Die Erfindung eignet sich insbesondere für Mähdrescher, bei denen der Strohhäcksler (70) auch das Kaff austrägt.

## Beschreibung

Die Erfindung betrifft eine Austrageinrichtung zum Austragen von Erntegut aus einer Erntemaschine, umfassend einen in Drehung versetzbaren Rotor, der innerhalb eines Gehäuses mit einem Gehäuseboden angeordnet ist.

Bei vielen Mähdreschern wird die Spreu durch separate Spreuverteiler ausgetragen. Die Spreuverteiler sind relativ große Gebläse, die in der Regel hydraulisch angetrieben werden. Deshalb sind sie relativ kostenaufwändig und schwer. Es kann daher vorteilhaft sein, die Spreu durch einen vorhandenen Strohhäcksler auszutragen.

In der DE 44 31 802 A wird vorgeschlagen, die Spreu durch einen hin- und herschwingenden Eingabeboden einer horizontalen Förderschnecke zuzuführen, die sie gemeinsam mit dem Stroh einem oder zwei Strohhäckslern mit vertikalen Drehachsen zuführt.

In den nachveröffentlichten Druckschriften DE 102 56 744 A und DE 103 03 503 A wird vorgeschlagen, die Spreu durch einen Schwingboden von der Reinigung zum Einlass des Strohhäckslers zu fördern, bei der DE 103 03 503 A unter Mitwirkung eines Rotationsförderers.

In der US 3 669 123 A wird ein Mähdrescher beschrieben, bei dem die Spreu durch einen mit dem Siebkasten verbundenen und durch ihn angetriebenen Schüttelboden dem sich nicht mitbewegenden Gehäuseboden eines Gehäuses zugeführt wird, in dem der Strohhäcksler angeordnet ist. Der Strohhäcksler befindet sich oberhalb des Einlasses für die Spreu. Durch den vom Strohhäcksler erzeugten Luftstrom wird die Spreu ausgetragen.

Gemäß der US 5 232 405 A dient ein Förderband zur Förderung der Spreu von der Reinigung in einen Strohhäcksler.

In der EP 0 958 727 A wird vorgeschlagen, die von der Reinigung freigegebene Spreu durch eine Querförderschnecke zunächst quer zur Fahrtrichtung nach außen zu fördern. Es entstehen an beiden Seiten des Mähdreschers zwei Teilströme, die durch weitere Förderschnecken nach hinten gefördert und einem Strohhäcksler mit horizontaler, quer zur Fahrtrichtung verlaufender Drehachse axial zugeführt werden.

Die genannten Druckschriften offenbaren eine mechanische Zuführung der Spreu in den Strohhäcksler. Die Spreu wird am Ende der Förderer durch die Schwerkraft (DE 44 31 802 A, US 5 232 405 A, DE 102 56 744 A), durch einen Rotationsförderer (DE 103 03 503 A, EP 0 958 727 A) oder durch die Saugwirkung des Strohhäckslers (US 3 669 123 A) in den Strohstrom eingebracht. Dabei können sich Übergabeprobleme ergeben.

In der DE 36 20 747 A wird ein Mähdrescher mit Strohhäcksler beschrieben. Das von den Strohschüttlern freigegebene Stroh rutscht entlang eines Strohleitblechs in den Strohhäcksler. Das Strohleitblech wird in eine Schwingbewegung versetzt, um die Förderung zu verbessern. Hier wird ebenfalls nur ein Element in Schwingung versetzt, das die Erntegutreste in den Strohhäcksler fördert, so dass sich bei der Übergabe in den Strohhäcksler Förderprobleme ergeben können.

Die der Erfindung zu Grunde liegende Aufgabe wird darin gesehen, eine verbesserte Austrageinrichtung für eine Erntemaschine bereitzustellen, bei der die oben erwähnten Nachteile nicht oder in einem verminderten Maß auftreten.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird vorgeschlagen, den Gehäuseboden des Gehäuses der Austrageinrichtung in eine Schwingbewegung zu versetzen. Durch diese schwingende bzw. vibrierende Bewegung, die vorzugsweise tangential zur Drehrichtung des Rotors der Austrageinrichtung (bzw. seines Hüllkreises) orientiert ist und somit der Zuführrichtung des auszutragenden Gutes entspricht, wird letzteres dem Rotor sukzessive zugeführt und von ihm erfasst. Da sich nicht nur die Zuführeinrichtung, sondern auch der Gehäuseboden bewegt, sind Übergabeprobleme am Einlass der Austrageinrichtung nicht zu befürchten.

Das Zuführen des auszutragenden Guts kann durch einen stufenförmigen Absatz im Gehäuseboden verbessert werden, der es in der Art eines Kolbens fördert und sukzessive dem Rotor zuführt.

Die Erfindung eignet sich insbesondere für Mähdrescher, bei denen als Austrageinrichtung in der Regel ein Strohhäcksler Verwendung findet. Es ist aber auch denkbar, den Gehäuseboden eines Gebläses oder eines beliebigen anderen zum Austragen von Erntegut dienenden Förderers auf erfindungsgemäße Weise in Schwingungen zu versetzen. Bei derartigen Ausführungsformen kann der Austrageinrichtung ein Strohhäcksler beliebiger Ausführungsform vor- und/oder nachgeordnet sein, z. B. eine Anzahl von mit einem Trennrotor zusammenwirkenden Häckselmessern, ein konventioneller Strohhäcksler mit einem Rotor und pendelnd gelagerten Messern, die mit Gegenmessern zusammenwirken, oder rotierende Arme, deren Enden mit Messern versehen sind.

Besonders vorteilhaft ist die Verwendung der Erfindung in Mähdreschern, bei denen der Austrageinrichtung ein erster Erntegutrestestrom (Stroh) von einer Trenneinrichtung und ein zweiter Erntegutrestestrom (Spreu) von einer Reinigungseinrichtung zugeführt wird. Der zweite Erntegutrestestrom wird dem Gehäuseboden zugeführt, während der erste Erntegutrestestrom in der Regel in an sich bekannter Weise dem Rotor von oben her zugeführt wird.

Zum Transport des zweiten Erntegutrestestroms kann ein beliebiger Förderer vorgesehen sein, beispielsweise ein Band- oder Becherförderer. Als besonders vorteilhaft hat sich jedoch ein Schwingbodenförderer erwiesen, der - wie der Gehäuseboden - in eine Schwingbewegung versetzt wird. Diese Schwingbewegung kann von der vorhandenen Schwingbewegung der Reinigungseinrichtung abgenommen werden.

Der Gehäuseboden der Austrageinrichtung kann starr mit dem Schwingboden verbunden sein. Da der Gehäuseboden sich jedoch in vertikaler (bzw. zum Rotor radialer) Richtung möglichst wenig bewegen sollte, um den Abstand zwischen dem Gehäuseboden und dem Rotor zwecks optimaler Gutförderung konstant zu halten, ergibt sich auch in dem Bereich des Schwingbodens in der Nähe des Gehäusebodens eine relativ geringe vertikale Bewegung, die zu nicht optimaler Förderung führen kann. Es ist daher bevorzugt, den Gehäuseboden durch ein Gelenk oder Scharnier mit dem Schwingboden zu verbinden. Letzterer hat dadurch eine hinreichende Beweglichkeit in vertikaler Richtung, was sein Fördervermögen verbessert.

Die vorliegende Erfindung lässt sich besonders sinnvoll an einem Mähdrescher einsetzen, bei dem der erste Erntegutrestestrom (d. h. das Stroh) in einer Häckselbetriebsart dem Strohhäcksler zugeführt und in einer Langstrohablagebetriebsart daran vorbeigeleitet wird, in der Regel an der Rückseite des Strohhäckslers. Der zweite Erntegutrestestrom wird bei der Häckselbetriebsart dem Strohhäcksler zugeführt und gemeinsam mit dem ersten Erntegutrestestrom näherungsweise über die Breite des Schneidwerks über das Feld verteilt. Bei der Langstrohablagebetriebsart wird der zweite Erntegutrestestrom ebenfalls dem Strohhäcksler zugeführt, um ihn mit einer zum unproblematischen Verlassen des Mähdreschers hinreichenden Geschwindigkeit zu versehen. Der zweite Erntegutrestestrom kann in der Langstrohablagebetriebsart mit im Schwad abgelegt werden. Er wird in das Strohschwad eingebracht oder darunter abgelegt. Dadurch kann die Spreu gemeinsam mit dem Stroh aufgenommen und verwertet werden. Bei einer anderen (insbesondere wahlweise möglichen) Betriebsart wird der zweite Erntegutrestestrom in der Langstrohablagebetriebsart nach dem Durchlaufen des Strohhäckslers über das Feld verteilt, wobei der Bereich des Strohschwads wahlweise nicht mit Spreu beaufschlagt wird.

In den Zeichnungen sind drei nachfolgend näher beschriebene Ausführungsbeispiele der Erfindung dargestellt. Es zeigt:
- Fig. 1: eine schematische Seitenansicht eines Mähdreschers mit einem Axialabscheider und einem Strohhäcksler, der zum Ausbringen der Spreu dient,
- Fig. 2: eine vergrößerte seitliche Ansicht der Fördereinrichtung, die in dem Mähdrescher aus Figur 1 die Spreu in den Strohhäcksler fördert,
- Fig. 3: eine seitliche Ansicht einer anderen Ausführungsform der Fördereinrichtung aus Figur 2, und
- Fig. 4: eine seitliche Ansicht einer anderen Ausführungsform der Fördereinrichtung aus Figur 2.

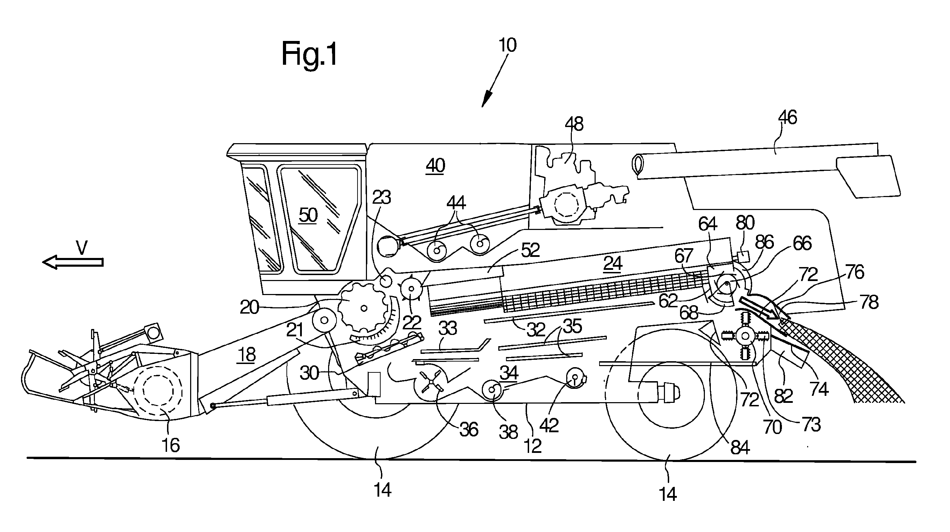

Die Figur 1 zeigt einen selbstfahrenden Mähdrescher 10 mit einem Tragrahmen 12, der sich über vordere, angetriebene und hintere lenkbare Räder 14 auf dem Gehäuseboden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Auch die Verwendung von stromab einer Dreschtrommel angeordneten Strohschüttlern oder Abscheidetrommeln als Abscheidemittel ist denkbar. Eine Abstreifrolle 23 und eine Wendetrommel 22 führen gemeinsam mit einem Zufuhrgehäuse das gedroschene Erntegut von der Dreschtrommel 20 und dem Dreschkorb 21 einem Axialabscheider 24 zu. Der Axialabscheider 24 wird an seiner Rückseite durch ein Getriebe 80 angetrieben. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Reinigungseinrichtung 34 auf einen Schwingboden 84 ausgeworfen, der weiter unten näher beschrieben wird. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus kontrolliert wird. Die verschiedenen Vorrichtungen zum Dreschen, Fördern, Reinigen und Abscheiden befinden sich innerhalb des Tragrahmens 12.

Vom Axialabscheider 24, der als Trenneinrichtung dient (oder einer der anderen oben genannten, alternativ verwendbaren Trenneinrichtungen), wird ein erster Erntegutrestestrom, der im Wesentlichen aus ausgedroschenen Erntegutresten (Stroh) besteht, durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, durch einen Antrieb in Drehung versetzt, in Figur 1 im Gegenuhrzeigersinn. Etwa auf halber Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um die Drehachse der Auswurftrommel 66 zwischen der in Figur 1 dargestellten Langstrohablageposition und einer nicht zeichnerisch wiedergegebenen Häckselposition verschwenkt werden.

Unterhalb und geringfügig hinter der Auswurftrommel 66 ist in einem Gehäuse 72 ein als Austrageinrichtung dienender Strohhäcksler 70 angeordnet, der um eine horizontale, quer zur Fahrtrichtung verlaufende Achse (in den Figuren im Gegenuhrzeigersinn) durch einen Antrieb in Drehung versetzbar ist. Er umfasst einen zylindrischen Rotor mit pendelnd daran aufgehängten Häckselmessern 73, die mit im Gehäuse 72 angeordneten stationären Gegenmessern 75 zusammenwirken, um die Erntegutreste zu häckseln und mittels einer stromab des Strohhäckslers 70 angeordneten und mit Strohleitblechen 82 ausgestatteten Strohverteilerhaube 74 etwa über die Schnittbreite des Mähdreschers 10 auf dem Feld zu verteilen. Der Rotor kann auch mit Elementen zum Luftschaufeln versehen sein. Ein oberer Teil des Gehäuses 72 erstreckt sich oberhalb des Strohhäckslers 70 vom vorderen Ende der Strohverteilerhaube 74 kreisbogenförmig bis etwa zu einem Punkt oberhalb der Drehachse des Strohhäckslers 70. Ein vorderer Teil des Gehäuses 72 verläuft zwischen dem Anlagepunkt des Strohleitelements 68 an der vorderen Wand 62 und der Vorderseite des Strohhäckslers 70 etwa vertikal nach unten.

Das Strohleitelement 68 ist in sich kreisbogenförmig konkav gekrümmt und umschließt die Auswurftrommel 66 um einen Winkelbereich von etwa 45° konzentrisch. Es ist an seinen in Querrichtung äußeren Enden schwenkbar am Tragrahmen 12 des Mähdreschers 10 angelenkt. Das Strohleitelement 68 erstreckt sich in der in Figur 1 wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste, d. h. der erste Erntegutstrom, von der Auswurftrommel 66 unterhalb einer Auswurfhaube 76 schräg nach hinten und unten abgegeben werden. Die Auswurfhaube 76 ist an ihrer Unterseite mit Strohleitblechen 78 versehen, um die Breite des Schwads, in der die Erntegutreste abgelegt werden, zu definieren.

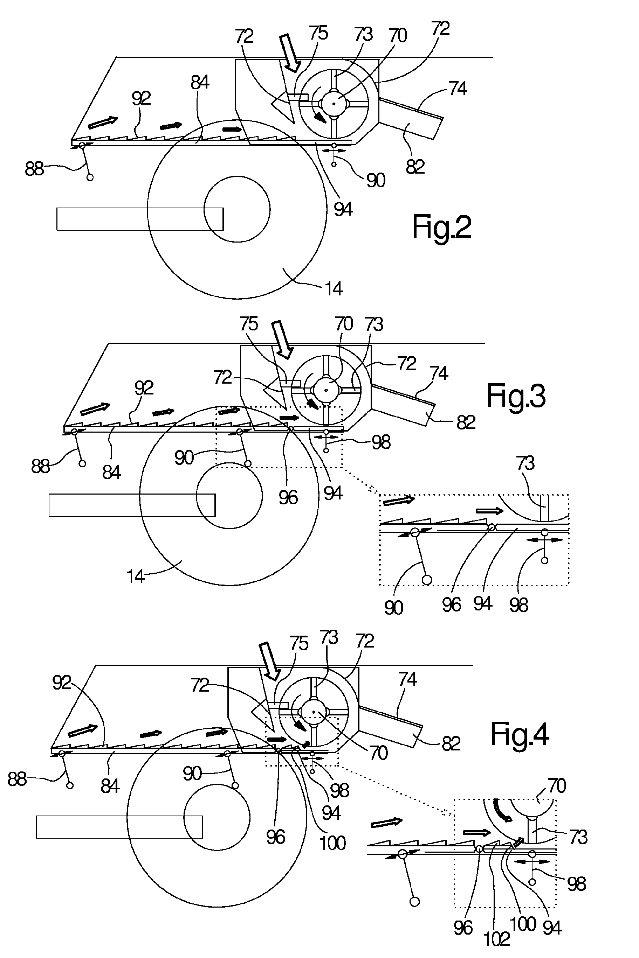

Der Strohhäcksler 70 wird auch in der Stellung des Leitblechs 68, wie sie in der Figur 1 dargestellt ist, in Drehung versetzt. Er übt eine Förderwirkung auf die ihm durch den Schwingboden 84 zugeführte Spreu und die Kurzstrohanteile auf, die dazu hinreicht, letztere entlang der Strohleitbleche 82 zu fördern und hinter dem Mähdrescher 10 auf dem Feld auszustoßen. Wie in den Figuren 2 bis 4 angedeutet, gelangt der erste Erntegutstrom entlang der vorderen Wand des Gehäuses 72 in den Strohhäcksler 70, wenn das Strohleitelement 68 nach hinten verschwenkt ist.

Die Strohleitbleche 82 der Strohverteilerhaube 74 sind um sich quer zu ihren Längsachsen und der Gutflussrichtung erstreckende Achsen schwenkbar an der Strohverteilerhaube 74 angelenkt. Auf diese Weise sind die Strohleitbleche 82 zwischen einer Breitablageposition und einer Schwadablageposition beweglich.

In der Häckselposition ist das Strohleitelement 68 um die Drehachse der Auswurftrommel 66 (bezüglich der Figur 1 im Uhrzeigersinn) nach hinten verschwenkt. Dadurch wird zwischen der vorderen Wand 62 und der vorderen Kante des Strohleitelements 68 eine Öffnung freigegeben, durch die der erste Erntegutrestestrom in den Strohhäcksler 70 gelangt. Im Strohhäcksler 70 wird das Stroh gehäckselt und gemeinsam mit der Spreu schräg nach hinten und unten ausgeworfen und über die Arbeitsbreite des Schneidwerks 16 über das Feld verteilt.

Der Schwingboden 84 erstreckt sich vom hinteren, unteren Ende der Reinigungseinrichtung 34 schräg nach hinten und geringfügig nach unten bis unterhalb des Strohhäckslers 70. Dort bildet er einen Gehäuseboden 94 des Gehäuses 72 des Strohhäckslers 70. Der Schwingboden 84 ist mechanisch mit der Reinigungseinrichtung 34 gekoppelt. Letztere wird durch geeignete Antriebe, z. B. Exzenter - ähnlich dem Schüttelboden 32 - auf an sich bekannte Weise in eine Schüttelbewegung mit horizontalen und vertikalen Komponenten versetzt. Der von der Reinigungseinrichtung 34 angetriebene, sich mit ihr mitbewegende Schwingboden 84 bildet somit einen in vertikaler und horizontaler Richtung oszillierenden Gehäuseboden 94 des Gehäuses 72 des Strohhäckslers 70, wobei der Gehäuseboden 94 mit dem Schwingboden 84 einteilig oder als separates Element hergestellt sein kann.

Die Anordnung und Lagerung des Schwingbodens 84 sind in der Figur 2 detaillierter dargestellt. Nahe seinem vorderen Ende ist er durch eine leicht nach vorn geneigte, aber im Wesentlichen vertikal orientierte Schwinge 88 am Rahmen 12 des Mähdreschers 10 abgestützt. Unterhalb des Strohhäckslers 70 ist er durch eine zweite Schwinge 90 am Rahmen des Mähdreschers 10 befestigt. Die Schwingen 90 sind jeweils um horizontal und quer zur Vorwärtsrichtung verlaufende Achsen am Rahmen 12 und am Schwingboden 84 gelagert.

Da der Schwingboden 84 an seiner Oberseite mit sägezahnförmigen Stufen 92 oder einer anderen geeigneten Oberflächenstruktur versehen ist und eine Schwingbewegung vollführt, wandern die Spreu und andere Kurzstrohanteile, die als zweiter Erntegutrestestrom von der Reinigungseinrichtung 34 an deren hinterem Ende durch die Wirkung des Gebläses 36 und durch die Schwerkraft auf den Schwingboden 84 abgegeben werden, auf dem Schwingboden 84 nach hinten.

Die Stufen 92 enden kurz vor dem Strohhäcksler 70. Der starr mit dem Schwingboden 84 verbundene und sich mit ihm hin- und herbewegende Gehäuseboden 94 des Gehäuses 72 des Strohhäckslers 70 bewirkt eine sukzessive Zuführung des zweiten Erntegutrestestroms zum Strohhäcksler. Da sich der Gehäuseboden 94 möglichst wenig in vertikaler Richtung bewegen soll, weil sich sonst der Abstand zwischen dem Hüllkreis der Häckselmesser 73 und dem Gehäuseboden 94 ändern würde, ist die zweite Schwinge 90 möglichst vertikal angeordnet.

In der Figur 3 ist eine zweite Ausführungsform der Erfindung dargestellt. Sie umfasst den mit sägezahnförmigen Stufen 92 versehenen Schwingboden 84, der an einer ersten Schwinge 88 und einer zweiten Schwinge 90 gelagert ist und vor dem Strohhäcksler 70 endet. Der Gehäuseboden 94 des Gehäuses 72 des Strohhäckslers 70 ist als separates Element ausgeführt und durch ein Gelenk 96 in Form eines Scharniers mit einer horizontalen und quer zur Vorwärtsrichtung orientierten Schwenkachse mit dem Schwingboden 84 verbunden. In der Nähe seines rückwärtigen Endes ist der Gehäuseboden durch eine dritte Schwinge 98 mit dem Rahmen 12 verbunden. Die vertikale Anordnung der dritten Schwinge 98 und das Gelenk 96 ermöglichen eine fast ausschließlich horizontale Bewegung des Gehäusebodens 94 und einen konstanten Abstand zum Hüllkreis des Strohhäckslers 70. Ein Vorteil dieser Ausführungsform liegt darin, dass die zweite Schwinge 90 nicht exakt vertikal angeordnet werden muss, so dass der Schwingboden 84 über seine gesamte Länge auch eine vertikale Bewegungskomponente aufweisen kann, was seine Förderwirkung verbessert.

Die in der Figur 4 wiedergegebene Ausführungsform unterscheidet sich von den zuvor dargestellten Ausführungsformen im Wesentlichen dadurch, dass die Oberseite des Gehäusebodens 94 nicht glatt ist. Sie ist im vorderen, stromaufwärts gelegenen Bereich mit kleineren Stufen 102 versehen, die den Stufen 92 des Schüttelbodens 84 entsprechen. Unmittelbar vor dem Berührungspunkt mit dem Hüllkreis der Häckselmesser 73 ist auf dem Gehäuseboden 94 ein größerer, mit einer nach hinten geneigten und mit einer dem Strohhäcksler 20 zugewandten Schrägung versehener Absatz 100 angeordnet, dessen Form etwa diesem Hüllkreis angepasst ist. Während die Stufen 102 den Transport des zweiten Erntegutstroms erleichtern, wirkt die Stufe 100 wie ein Kolben, der das Material sukzessive in den Wirkbereich des Strohhäckslers 70 hineindrückt. Dadurch erreicht man eine aktive und verbesserte Förderung des Erntegutstroms in den Strohhäcksler 70.

## Patentansprüche

1. Austrageinrichtung zum Austragen von Erntegut aus einer Erntemaschine, umfassend einen in Drehung versetzbaren Rotor, der innerhalb eines Gehäuses (72) mit einem Gehäuseboden (94) angeordnet ist, **dadurch gekennzeichnet, dass** der Gehäuseboden (94) in eine lineare Hin- und Herbewegung versetzbar ist.

2. Austrageinrichtung nach Anspruch 1, **dadurch gekennzeichnet, dass** die Bewegungsrichtung des Gehäusebodens (94) tangential zum Umfang des Rotors verläuft.

3. Austrageinrichtung nach einem der Ansprüche 1 bis 3, **dadurch gekennzeichnet, dass** der Gehäuseboden (94) mit einem stufenförmigen Absatz (100) versehen ist.

4. Mähdrescher (10) mit einer Austrageinrichtung nach einem der Ansprüche 1 bis 3.

5. Mähdrescher nach Anspruch 4, **dadurch gekennzeichnet, dass** die Austrageinrichtung ein Strohhäcksler (70) oder ein Gebläse ist.

6. Mähdrescher (10) nach Anspruch 5, **dadurch gekennzeichnet, dass** er mit einer Trenneinrichtung ausgestattet ist, aus der der Austrageinrichtung ein erster Erntegutrestestrom zuführbar ist, dass er mit einer Reinigungseinrichtung (34) versehen ist, von der der Austrageinrichtung ein zweiter Erntegutrestestrom zuführbar ist, und dass der zweite Erntegutrestestrom dem Gehäuseboden (94) zuführbar ist.

7. Mähdrescher (10) nach Anspruch 6, **dadurch gekennzeichnet, dass** der zweite Erntegutrestestrom dem Gehäuseboden (94) durch einen Schwingboden (84) zuführbar ist.

8. Mähdrescher (10) nach Anspruch 7, **dadurch gekennzeichnet, dass** der Schwingboden (84) und/oder der Gehäuseboden (94) mechanisch mit der in eine Schwingbewegung versetzbaren Reinigungseinrichtung (34) verbunden ist und durch sie antreibbar ist.

9. Mähdrescher (10) nach Anspruch 7 oder 8, **dadurch gekennzeichnet, dass** der Gehäuseboden (94) starr oder durch ein Gelenk (96) mit dem Schwingboden (84) verbunden ist.

10. Mähdrescher (10) nach einem der Ansprüche 6 bis 9, **dadurch gekennzeichnet, dass** der erste Erntegutstrom in einer Häckselbetriebsart der Austrageinrichtung zuführbar und in einer Langstrohablagebetriebsart an der Austrageinrichtung vorbeiführbar und als Schwad auf einem Feld ablegbar ist, und dass der zweite Erntegutstrom in der Häckselbetriebsart und der Langstrohablagebetriebsart der Austrageinrichtung zuführbar ist.
